# EUROPÄISCHE PATENTANMELDUNG

(11) **EP 3 251 982 A1**
(43) Veröffentlichungstag der Anmeldung: **06.12.2017**
(21) Anmeldenummer: 16172905.8
(22) Anmeldetag: 03.06.2016
(51) Int. Cl.: B65G 17/00

(54) **TRANSPORTSYSTEM FÜR STÜCKGUT ODER STREUGUT**

(71) Anmelder: Zinterl, Mario, 8142 Dobl-Zwaring (AT)
(72) Erfinder: Zinterl, Mario, 8142 Dobl-Zwaring (AT)
(74) Vertreter: Sonn & Partner Patentanwälte

(57) **Zusammenfassung**

Transportsystem (3) für Stückgut oder Streugut umfassend eine Fördereinrichtung (4) und mindestens zwei mit der Fördereinrichtung (4) in eine Förderrichtung (6) förderbare Transportbehälter (5) für das Transportgut, wobei die mindestens zwei Transportbehälter (5) individuell quer zur Förderrichtung (6) beweglich gelagert sind , wobei die Transportbehälter (5) einen Führungszapfen (16) zum Anschlag mit eine Weiche (18) aufweisenden Führungselementen (15) aufweisen, so dass die einzelnen Transportbehälter (5) individuell verschieden quer zur Förderrichtung (6) bewegt werden können.

## Beschreibung

Die Erfindung betrifft ein Transportsystem für Stückgut oder Streugut sowie ein Verfahren zum Transportieren von Stückgut oder Streugut mit einem solchen Transportsystem. Als Stückgut wird in diesem Zusammenhang vereinzeltes Material bezeichnet, insbesondere Metallschrott sowie Metall- oder Kunststofffragmente oder mineralische Fragmente.

Eine bevorzugte Anwendung der Erfindung ist die automatisierte Materialprüfung. Dabei wird ein bereits vereinzeltes Material (das Stückgut) einem Prüfsystem zugeführt und nach einer Bewertung durch das Prüfsystem in unterschiedliche Fraktionen aufgeteilt. Jeder Fraktion ist z.B. ein Sammelbehälter zugeordnet. Das vorliegende Transportsystem kann insbesondere für den Transport eines so bewerteten Stückguts zu den verschiedenen Sammelbehältern verwendet werden.

Es sind bereits Transportsysteme für Stückgut bekannt, welche bei derartigen Anwendungen zum Einsatz kommen.

Die DE 10063806 A1 zeigt ein Transportsystem, bei dem die Loseteilchen des Stückguts gemeinsam auf einem Förderband transportiert werden. Entlang des Förderbands sind mehrere separat ansteuerbare Schieber angeordnet, mit denen die Loseteilchen quer zur Förderrichtung von dem Förderband herunter und in einen der ebenfalls entlang des Förderbands aufgestellten Sammelbehälter geschoben werden kann. Ein Nachteil dieses Systems ist die geringe Kontrolle über die Position und Bewegung der Loseteilchen auf dem Förderband. Die Bewegung der Schieber muss jedoch exakt auf die Position der Loseteilchen abgestimmt sein, um Fehler beim Transport zu den Sammelbehältern zu vermeiden. Dies wird bei kleinen, flachen und/oder in unregelmäßigen Abständen angeordneten Loseteilchen zunehmen schwierig.

Außerdem ist es z.B. aus der DE 4102767 A1 bekannt, bei einem ansonsten ähnlichen Transportsystem anstelle der Schieber eine Vorrichtung zum Ausblasen der Loseteilchen zu verwenden. D.h. das Stückgut wird mittels Druckluft quer zur Förderrichtung vom Förderband herunter und in einen Sammelbehälter geblasen. Das Ausblasen funktioniert allerdings nur für bestimmte Arten von Stückgut ausreichend zuverlässig, d.h. es kann nicht unabhängig vom Stückgut ein zuverlässiger Auswurf sichergestellt werden. Zugleich besteht die Gefahr, dass bei in unregelmäßigen Abständen angeordneten Loseteilchen unbeabsichtigt zusätzlich benachbarte Loseteilchen ausgeworfen werden.

Es ist eine Aufgabe der Erfindung, ein Transportsystem der eingangs angeführten Art zu schaffen, welches die Nachteile der bekannten Lösungen beseitigt oder zumindest abmildert.

Die Erfindung löst diese Aufgabe mit einem Transportsystem der eingangs angeführten Art, umfassend eine Fördereinrichtung und mindestens zwei mit der Fördereinrichtung in eine Förderrichtung förderbare Transportbehälter für das Transportgut, wobei die mindestens zwei Transportbehälter individuell quer zur Förderrichtung beweglich gelagert sind. Die Transportbehälter sind dementsprechend mit einer gemeinsamen Fördereinrichtung verbunden. Der Abstand zwischen den einzelnen Transportbehältern in Förderrichtung ist vorzugsweise fest und wird im Betrieb des Transportsystems nicht geändert. Jeder einzelne Transportbehälter kann unabhängig von den anderen Transportbehältern in eine Richtung quer zur Förderrichtung, insbesondere entlang einer quer zur Förderrichtung angeordneten Verschiebeachse, bewegt werden.

Außerdem löst die Erfindung die oben genannte Aufgabe mit einem Verfahren der eingangs angeführten Art, mit einem solchen Transportsystem, wobei die Transportbehälter durch die Fördereinrichtung gemeinsam in Förderrichtung bewegt werden, und wobei die einzelnen Transportbehälter individuell quer zur Förderrichtung bewegt werden. D.h. die Transportbehälter werden in Förderrichtung einheitlich, vorzugsweise gleichmäßig, bewegt. Quer zur Förderrichtung werden die Transportbehälter entsprechend den den Behältern individuell zugeordneten Zielpositionen bewegt.

Durch die Verwendung von Transportbehältern kann eine zuvor vorgenommene Vereinzelung während eines Transportvorganges zuverlässig beibehalten werden. Das Transportgut wird durch die Bewegung der Transportbehälter bewegt. Es kann daher in den Transportbehältern eine stabile Lage einnehmen. Die Einnahme einer solchen stabilen Lage kann z.B. durch Rütteln der Transportbehälter nach der Aufnahme des Transportguts begünstigt werden. Das Rütteln kann beispielsweise durch eine abwechselnd nach beiden Querrichtungen gerichtete Führung, z.B. entlang einer gewellten Führungsschiene, erzielt werden. Indem nur die eigens vorgesehenen Transportbehälter bewegt werden müssen, wird die Kontrollierbarkeit der Position und Bewegung des Transportgutes verbessert. Die Position der Transportbehälter kann vergleichsweise einfacher überwacht und gesteuert werden als z.B. die Position des auf einem Förderband verstreuten Transportguts. Insbesondere kann die Auswahl unterschiedlicher Transportziele mittels entsprechender Querpositionen bzw. Querbewegungen der Transportbehälter, präzise und unabhängig vom Inhalt des jeweiligen Transportbehälters und somit unabhängig von den Eigenschaften des Transportguts gesteuert werden.

Die einzelnen Transportbehälter können während einer Sortierphase vorzugsweise in Abhängigkeit von dem jeweils darin enthaltenen Transportgut quer zur Förderrichtung bewegt werden. In diesem Fall kann das Transportsystem zum Sortieren des Transportguts verwendet werden. Alternativ ist aber auch eine zufällige, gleichmäßige Verteilung auf mehrere Zielpositionen denkbar, für welche eine Kenntnis des jeweils in den Transportbehältern aufgenommenen Transportguts nicht erforderlich ist.

Hinsichtlich einer stabilen Anordnung des Transportguts in den Transportbehältern ist es besonders vorteilhaft, wenn die mindestens zwei Transportbehälter eine sich ausgehend von einer Öffnung verjüngende Aufnahme für das Transportgut aufweisen. Beispielsweise kann die Aufnahme im Wesentlichen trichterförmig oder keilförmig (mit Kanten parallel zur Förderrichtung) ausgebildet sein. Die sich verjüngende Form, insbesondere die Form eines Trichters mit einem definierten Fluchtpunkt bzw. Zentrum, bewirkt eine präzise und weitgehend reproduzierbare Positionierung des Transportguts sowie eine zuverlässige und ruhige Lagerung entlang der Transportstrecke und einer etwaigen Prüfstrecke, vor allem mit einer hohen Stabilität der seitlichen Lage des Transportguts.

Es hat sich als besonders günstig herausgestellt, wenn die Fördereinrichtung zumindest ein laufendes Zugorgan aufweist, mit dem die Transportbehälter verbunden sind. Die Transportbehälter können mit einem gemeinsamen, zentralen Antriebssystem befördert werden. Ein solcher zentraler Antrieb ist effizient im Betrieb und einfach in Herstellung und Wartung. Zudem stellt er eine homogene Bewegung (d.h. eine ungefähr gleiche Geschwindigkeit zu jedem Zeitpunkt) der Transportbehälter sicher.

Für die Steuerung der Bewegung der Transportbehälter quer zur Förderrichtung kann vorzugsweise zumindest ein Führungselement, insbesondere eine Führungsschiene oder ein Leitblech vorgesehen sein. In diesem Fall ist kein eigener Antrieb für eine Querbewegung erforderlich, sondern die nötige Kraft wird mittels Umlenkung aus der Förderbewegung bewirkt. Eine solche Steuerung ist daher besonders einfach und zuverlässig.

In diesem Zusammenhang ist es besonders günstig, wenn die Transportbehälter Führungszapfen zum Anschlag mit einer Führungsschiene aufweisen. Die Führungszapfen können beispielsweise an einer Unterseite der Transportbehälter vorgesehen sein. Sie haben allgemein eine kleinere Abmessung als die Transportbehälter selbst und ermöglichen daher ein wesentlich kompakteres Schienensystem. Außerdem muss das Schienensystem in diesem Fall nicht unmittelbar an den Transportbehältern angreifen und kann bezüglich der Transportbehälter versetzt, z.B. unterhalb, angeordnet sein. Dadurch können von den Transportbehältern auch unmittelbar angrenzende oder sogar überlappende Zielpositionen angefahren werden, weil zwischen den einzelnen Zielpositionen kein Platz für eine Schiene vorgesehen sein muss.

Darüber hinaus kann bei der Verwendung einer Führungsschiene eine schaltbaren Steuerung der Bewegung der Transportbehälter quer zur Förderrichtung erzielt werden, indem die Führungsschiene zumindest eine Weiche, vorzugsweise eine Kaskade von mindestens zwei hintereinander angeordneten Weichen, aufweist. Eine Weiche bietet einen einfachen und robusten mechanischen Aufbau und somit eine zuverlässige Möglichkeit einer schaltbaren Steuerung. Besonders vorteilhaft ist die Verwendung einer Weiche zusammen mit den Führungszapfen an den Transportbehältern. In diesem Fall können vergleichsweise kleine Weichenzungen (auf die Führungszapfen abgestimmt) verwendet werden. Dadurch können vergleichsweise kurze Schaltwege und in der Folge kleine und schnelle Antriebssysteme verwendet werden. Damit lassen sich vergleichsweise hohe Schaltzyklen und somit eine hohe Transportgeschwindigkeit bzw. ein hoher Durchsatz des Transportsystems. Die Weichen sind vorzugsweise mit einem individuell ansteuerbaren Antrieb verbunden. Die Weichen können insbesondere pneumatisch, hydraulisch oder elektrisch angetrieben werden. Die Verwendung einer Weichenkaskade bzw. eines Weichenbaums ermöglicht eine Steuerung der Transportbehälter entsprechend einer Vielzahl von möglichen Querpositionen bei zugleich geringem Kurvenwinkel bei jeder einzelnen Weiche.

Anstelle von Weichen können selbstverständlich auch andere Schaltmittel oder Stellvorrichtungen, z.B. mit auf Drehscheiben oder Schiebern angeordneten Führungsschienen, verwendet werden.

Die Fördereinrichtung ist vorzugsweise zum Umdrehen der Transportbehälter um eine horizontale Achse eingerichtet. D.h. der Auswurf des Sortiergutes aus den Transportbehältern kann in Förderrichtung durch die Zentrifugalkraft beim Umdrehen des Transportbehälters erfolgen. Die umgedrehten, d.h. kopfstehenden, Transportbehälter können anschließend zurück zu einer Aufnahmeposition geführt werden. In dieser Stellung ist die Aufnahme für das Sortiergut zu einer Unterseite geöffnet. Es erfolgt demnach zusätzlich zur Zentrifugalkraft beim Umdrehen ein zusätzlicher Auswurf durch die Schwerkraft während der Rückführung. Vor dem Erreichen der Aufnahmeposition werden die Transportbehälter erneut umgedreht.

Das vorliegende Transportsystem ist besonders geeignet für die Verwendung in einem Sortiersystem zusammen mit einem Prüfsystem zur Klassifizierung eines in den Transportbehältern jeweils aufgenommenen Sortierguts und zur Ansteuerung des Transportsystems in Abhängigkeit von einer durchgeführten Klassifizierung, insbesondere zur Ansteuerung einer oder mehrerer Weichen des Transportsystems.

Das Prüfsystem kann vorzugsweise eine Analyseeinrichtung zur Feststellung der Bestandteile des Sortierguts umfassen, z.B. ein Spektrometer zur spektroskopischen Untersuchung der Zusammensetzung. In diesem Zusammenhang ist die durch die Verwendung von Transportbehältern, insbesondere mit einer sich nach unten verjüngenden Aufnahme, besonders vorteilhaft, weil die seitliche Lage des Sortierguts während der Prüfung nicht verändert werden darf. Die seitliche Stabilität des Sortierguts ist deshalb besonders wichtig, weil zur Prüfung beispielsweise mit einem Laser eine Prüfstelle des Sortierguts lokal angeregt oder erhitzt werden kann und die nachgeordnete Analyseeinrichtung genau die Prüfstelle untersuchen soll.

Dementsprechend können die einzelnen Transportbehälter im Rahmen des vorliegenden Verfahrens während einer der Sortierphase vorangehenden Prüfphase ein Prüfsystem durchlaufen, wobei die Transportbehälter in der Prüfphase in einer einheitlichen vordefinierte Querposition (d.h. einer bestimmten Position auf einer quer zur Förderrichtung angeordneten Achse) geführt werden. Die Prüfung bzw. Erkennung des Transportguts während der Prüfphase profitiert dabei von der durch die Transportbehälter erzielten stabilen Position des Transportguts (bzw. Sortierguts). Besonders vorteilhaft ist dabei die bereits oben erläuterte Verwendung von Behältern mit trichterförmigen Aufnahmen, in denen das Sortiergut durch Rütteln vor der Prüfphase in eine besonders stabile Lage gebracht werden kann.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Die Zeichnungen zeigen im Einzelnen:
Fig. 1 eine schaubildliche Ansicht eines Sortiersystems mit einem erfindungsgemäßen Transportsystem;
Fig. 2 schematische eine Draufsicht auf den Endabschnitt des Transportsystems gemäß Fig. 1 mit einer Fördereinrichtung und mehreren Transportbehältern;
Fig. 3 schematisch eine schaubildliche Ansicht eines Abschnitts des Transportsystems gemäß Fig. 1 mit einem einzelnen Transportbehälter;
Fig. 4 schematisch eine Detailansicht des Transportbehälters gemäß Fig. 3;
Fig. 5 schematische eine Draufsicht von oben auf einen unteren Abschnitt des Transportsystems gemäß Fig. 1;
Fig. 6a und 6b schematisch schaubildliche Ansichten zweier alternativer Ausführungsformen eines Transportbehälters mit einer Führungsleiste; und
Fig. 7 schematisch den Aufbau einer Weiche des Transportsystems gemäß Fig. 1.

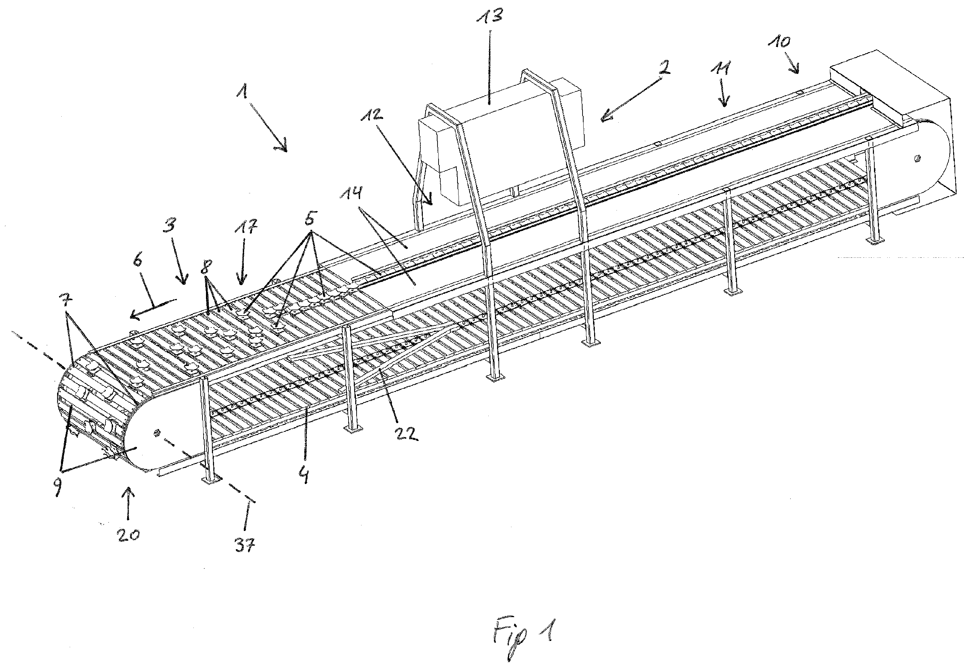

In Fig. 1 ist ein Sortiersystem 1 für Stückgut oder Streugut mit einem Prüfsystem 2 und einem Transportsystem 3 gezeigt. Das Transportsystem 3 umfasst eine Fördereinrichtung 4 und eine Vielzahl von Transportbehältern 5 für das Transportgut, d.h. zur Aufnahme des durch das Stückgut oder Streugut gebildeten Transportguts. Die Transportbehälter 5 sind mit der Fördereinrichtung 4 verbunden und mit der Fördereinrichtung 4 in eine Förderrichtung 6 förderbar. Die Fördereinrichtung 4 treibt eine Bewegung der Transportbehälter 5 in Förderrichtung 6 (oder in eine genau entgegen gesetzte Richtung) an. Zusätzlich zu der Beweglichkeit in Förderrichtung 6 sind die Transportbehälter 5 individuell quer zur Förderrichtung 6 beweglich gelagert.

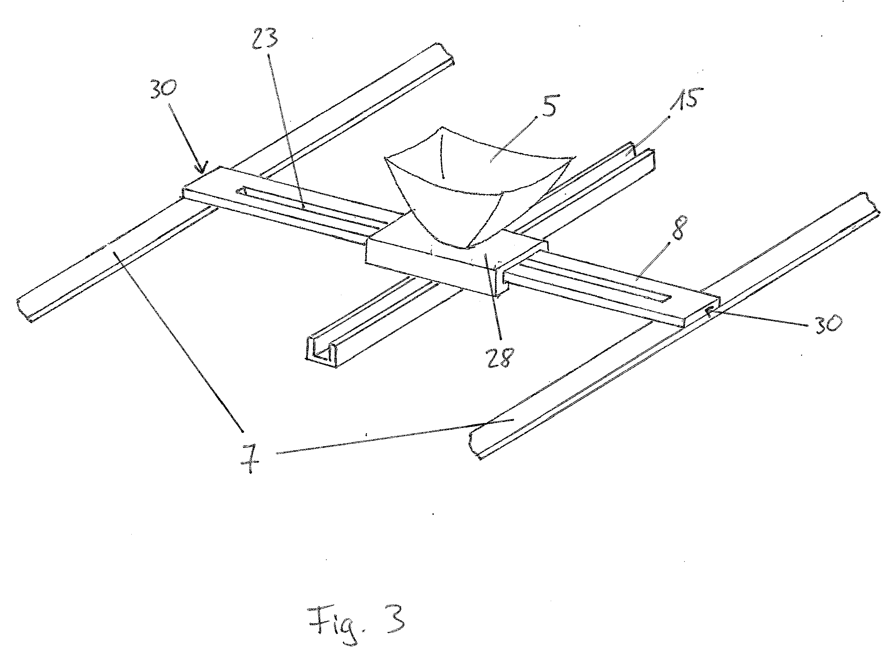

Die Fördereinrichtung 4 weist zwei laufende Zugorgane 7 in Form von Zugriemen auf. Die einzelnen Transportbehälter 5 sind jeweils mit beiden Zugorganen 7 über Führungsleisten 8 verbunden. Die Führungsleisten 8 (vgl. Fig. 3) sind an beiden Enden jeweils mit einem Zugorgan 7 verbunden, z.B. mit Nieten an den Zugriemen befestigt. Auf jeder Führungsleiste 8 ist ein Transportbehälter 5 verschieblich gelagert. Die Zugorgane 7 der Fördereinrichtung 4 werden mittels Treibrädern 9 angetrieben, wobei die Treibrädern 9 mit einem Antrieb (nicht gezeigt), z.B. einem Elektromotor, gekuppelt sind. Durch den Antrieb der Treibräder 9 werden die Zugorgane 7 gemeinsam in eine Förderrichtung 6 bewegt, wobei die Führungsleisten 8 mit den darauf angeordneten Transportbehältern 5 mitgenommen werden. Dadurch wird das in den Transportbehältern 5 aufgenommene Transportgut durch das Sortiersystem 1 transportiert.

Dabei durchläuft das in den Transportbehältern 5 aufgenommene Transportgut mehrere Abschnitte oder Bereiche. In einem Ladebereich 10 werden die Transportbehälter 5 mit dem zu sortierenden Stückgut oder Streugut aus einer Vereinzelungsvorrichtung (nicht gezeigt) beladen. Dabei werden die Transportbehälter 5 zusätzlich gerüttelt, d.h. einer seitlichen Vibrationsbewegung ausgesetzt, damit das aufgenommene Transportgut eine stabile seitliche Lage innerhalb der Transportbehälter 5 einnimmt.

Nach dem Ladebereich 10 durchlaufen die Transportbehälter 5 einen Beruhigungsbereich 11, in dem die Transportbehälter 5 entlang einer gleichmäßigen, vorzugsweise geraden, Bahn geführt werden, sodass das darin aufgenommene Sortiergut eine ruhige Lage einnimmt. Nach dem Beruhigungsbereich 11 durchlaufen die Transportbehälter 5 einen Prüfbereich 12, in dem das darin aufgenommene Sortiergut mit einem Prüfsystem 2 geprüft wird. Dabei wird mit einer Analysevorrichtung 13 z.B. die Zusammensetzung und/oder die Abmessungen des Sortierguts ermittelt. Die Analysevorrichtung 13 kann ein Spektrometer umfassen und zur Untersuchung des Sortierguts mittels Laserspektroskopie eingerichtet sein. Mit dem Prüfsystem 2 kann das in den Transportbehältern jeweils aufgenommene Sortiergut klassifiziert werden (z.B. nach Bestandteilen).

Zumindest im Prüfbereich 12 werden die Transportbehälter 5 durch zwei Führungselemente 14 in Form von Leitblechen in einer definierten Querposition gehalten. Die Führungselemente 14 sind dabei relativ zur Analysevorrichtung 13 fest angeordnet, sodass die Transportbehälter 5 relativ zur Analysevorrichtung 13 gegen eine seitliche Bewegung festgelegt sind. Das stabil in den Transportbehältern 5 aufgenommene Sortiergut ist dementsprechend ebenfalls hinsichtlich seiner seitlichen Lage relativ zur Analysevorrichtung 13 stabilisiert. Die Führungselemente 14 können bereits im Beruhigungsbereich 11 beginnen und sich in den Prüfbereich 12 erstrecken. Zur zusätzlichen Stabilisierung der Transportbehälter 5 ist an einer Unterseite der Führungsleisten 8 ein zusätzliches Führungselement 15 in Form einer Führungsschiene angeordnet. Mit den Führungselementen 14 und der Führungsschiene 15 des Transportsystems 3 kann die Position und Bewegung der einzelnen Transportbehälter 5 quer zur Förderrichtung 6 entlang der jeweiligen Führungsleiste 8 gesteuert werden. In der Führungsschiene 15 werden Führungszapfen 16, welche an der Unterseite mit den Transportbehältern 5 verbunden sind, aufgenommen und geführt. Die Führungszapfen 16 der Transportbehälter 5 sind zum Anschlag mit der Führungsschiene 15 und/oder mit dem Leitblech vorgesehen. Durch die stabile Führung oberhalb und unterhalb der Führungsleisten 8 wird sowohl einer seitliche Translation als auch einer seitliche Rotation zuverlässig entgegen gewirkt.

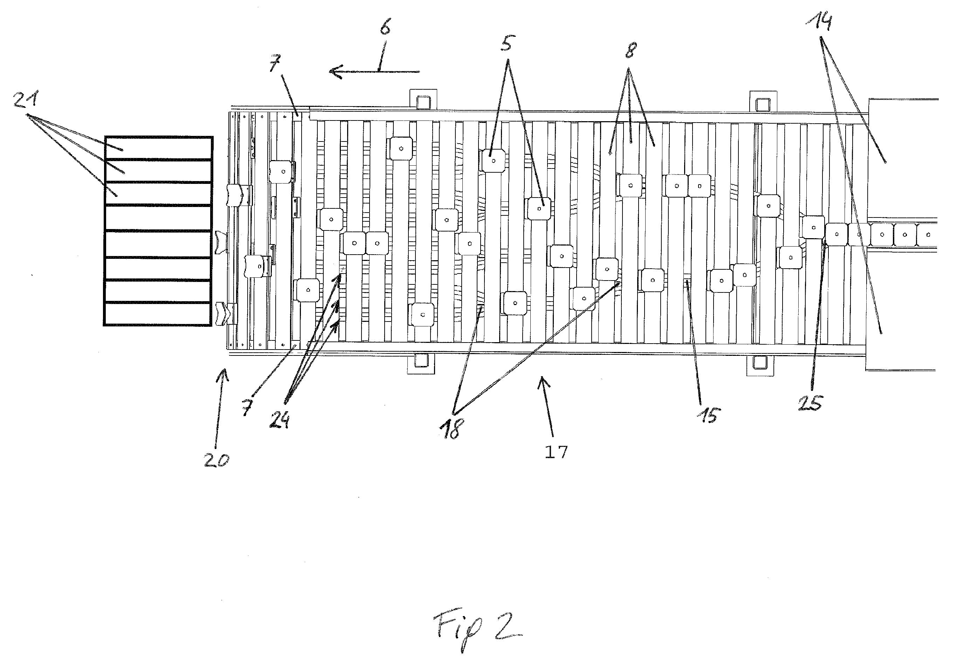

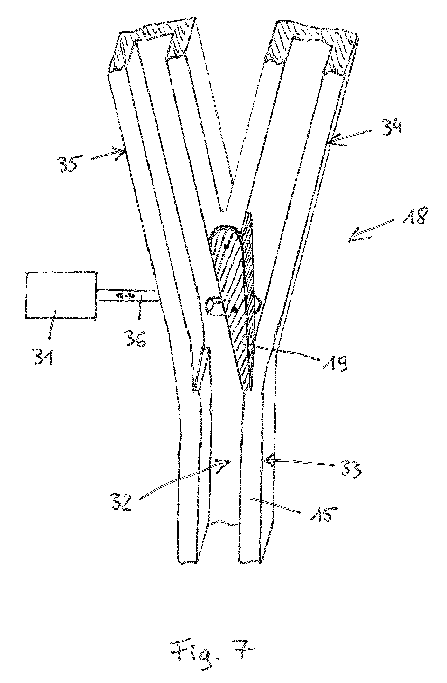

Nach dem Prüfbereich 12 werden die Transportbehälter 5 in eine Sortierbereich 17 gefördert. Im Sortierbereich 17 teilt sich die Führungsschiene 15 in eine Kaskade von Weichen 18 auf (vgl. Fig. 2), d.h. die Führungsschiene 15 weist mehrere, in einer Kaskade hintereinander angeordnete Weichen 18 auf. Durch die Einstellung der Weichen 18 kann die Querposition der Transportbehälter 5, d.h. die Position entlang der jeweiligen Führungsleiste 8, gesteuert werden. Abhängig von dieser Steuerung wird jeder Transportbehälter 5 beim Durchlaufen des Sortierbereichs 17 in eine vorgesehen Querposition verschoben. Die Weichen 18, d.h. insbesondere die Weichenzungen 19 (vgl. Fig. 7), sind mittels elektrischer Aktuatoren einstellbar. Die Ansteuerung der Weicheneinstellungen des Transportsystems 3 kann vom Prüfsystem 2 in Abhängigkeit von einer durchgeführten Klassifizierung durchgeführt werden.

Nach dem Sortierbereich 17 gelangen die Transportbehälter 5 in einen Abwurfbereich 20. Im Abwurfbereich 20 werden die Transportbehälter 5 in Förderrichtung 6 um eine horizontale Achse 37 umgedreht, indem sie mit der Fördereinrichtung im Wesentlichen entlang dem Umfang der Treibräder 9 um 180° mit geführt werden. Dabei wird das in den Transportbehältern 5 enthaltene Sortiergut zunächst durch die Zentrifugalkraft und später durch die Schwerkraft in Auffangbehälter 21 (vgl. Fig. 2) ausgeworfen. Die Auffangbehälter 21 sind dabei entsprechend den durch die Kaskade von Weichen 18 ansteuerbaren Querpositionen angeordnet, sodass das Sortiergut durch eine entsprechende Ansteuerung der Weichen 18 in einen bestimmten Auffangbehälter 21 einsortiert werden kann.

Nachfolgend dem Abwurfbereich 20 werden die Transportbehälter 5 entlang den Zugorganen 7 in der Art eines Förderbandes kopfüber zurück zum Ladebereich 10 gefördert. Damit die im Ladebereich 10 ankommenden Transportbehälter 5 wieder eine vorbestimmte Querposition aufweisen, sind an der den Transportbehältern 5 gegenüber liegenden Unterseite der Führungsleisten 8 zwei diagonal zur Mitte der Führungsleisten 8 zusammen laufende Führungselemente 22 in Form von Führungsschienen vorgesehen, welche an Führungszapfen 16 von außerhalb der Mitte angeordneten Transportbehälter 5 anschlagen und die Transportbehälter 5 in eine Reihe entlang einer festgelegten Querposition zusammen führen, insbesondere zentrieren.

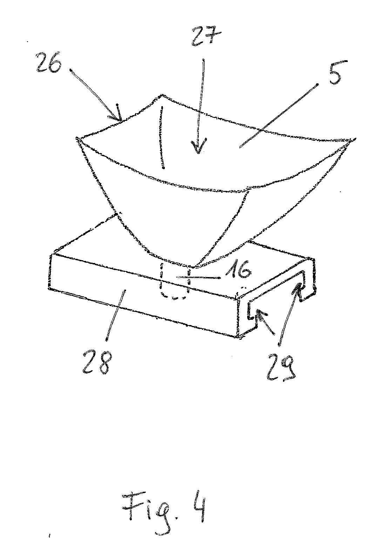

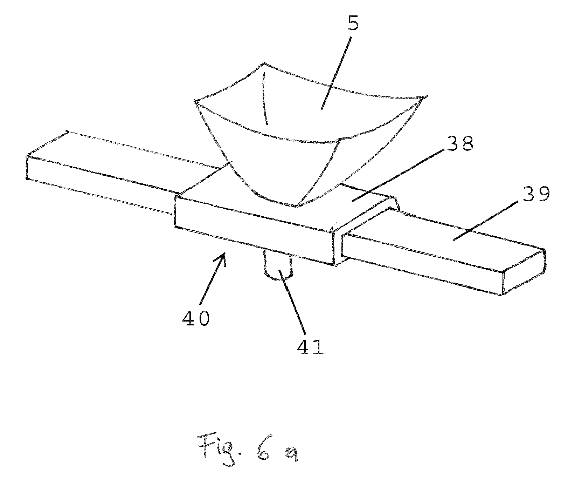

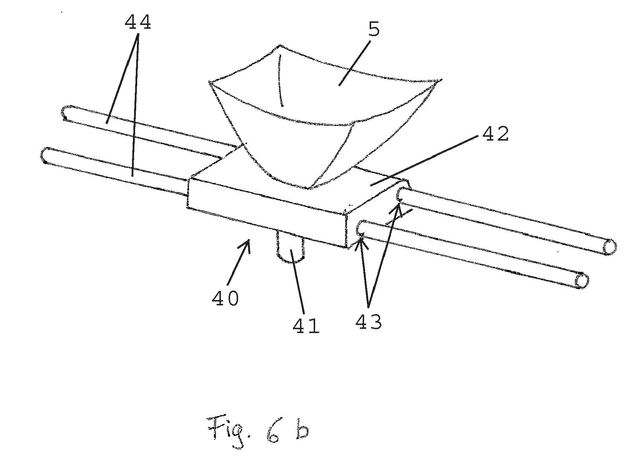

In Fig. 2 ist der Endabschnitt des Transportsystems 3 mit dem Sortierbereich 17 und dem Abwurfbereich 20 genauer dargestellt. Dabei ist der parallele Verlauf der beiden die Fördereinrichtung 4 bildenden Zugorgane 7 in Förderrichtung 6 ersichtlich. Zwischen den Zugorganen 7 erstrecken sich in gleichmäßigen Abständen die Führungsleisten 8, auf denen jeweils ein Transportbehälter 5 verschieblich gelagert ist. Der Abstand zwischen den Führungsleisten 8 ist in Fig. 2 zugunsten der Darstellbarkeit gegenüber Fig. 1 vergrößert dargestellt. In der Praxis können die Führungsleisten wie in Fig. 1 gezeigt dicht hintereinander angeordnet sein. Die Führungszapfen 16 der Transportbehälter 5 (vgl. Fig. 4, 6a oder 6b) stehen mit der Führungsschiene 15 zumindest vorübergehend in Kontakt. Die Führungsschiene 15 weist in diesem Ausführungsbeispiel insgesamt sieben, in einer Kaskade angeordnete Weichen 18 auf. Als Kaskade wird in diesem Zusammenhang verstanden, dass beide Ausläufe der ersten Weiche 25 in den Einlauf einer nachgeordneten Weiche 18 führen. Die insgesamt vier Ausläufe dieser nachgeordneten Weichen 18 führen ihrerseits in die Einläufe von weiter nachgeordneten Weichen 18. Die Transportbehälter 5 können demnach durch eine entsprechende Einstellung der Weichen 18 entlang der Kaskade zuverlässig in eine von acht verschiedenen Querpositionen 24 bewegt bzw. verschoben werden während sie den Sortierbereich 17 durchlaufen. Aufgrund der Anordnung der Weichen 18 in einer Kaskade durchlaufen alle Transportbehälter 5 genau drei Weichen 18. Bei einer weiteren Stufe der Kaskade würden dementsprechend für insgesamt 16 Endpositionen (Querpositionen im Abwurfbereich) nur vier Weichen durchlaufen und dementsprechend durchgeschaltet werden müssen. Die Anordnung der Weichen 18 in einer Kaskade hat daher gegenüber einer Anordnung der Weichen hintereinander den Vorteil, dass im Allgemeinen für dieselbe Anzahl von Endpositionen bzw. Kategorien weniger Weichen durchgeschaltet und durchlaufen werden müssen.

In Fig. 3 und 4 ist ein Abschnitt des Transportsystems 3 mit einem einzelnen Transportbehälter 5 bzw. der Transportbehälter 5 separat im Detail dargestellt. Hier ist insbesondere die sich ausgehend von einer Öffnung 26 verjüngende Aufnahme 27 des Transportbehälters 5 ersichtlich. Die Aufnahme 27 definiert ein geschwungenes trichterförmiges Aufnahmevolumen, in das das Transportgut bzw. Sortiergut aufgenommen werden kann. Die Größe der Aufnahme 27 ergibt sich aus der Korngröße des Sortierguts. Hier sind Größen von 1 mm bis zu einem Meter denkbar, vorzugsweise Größen ab 1 cm. Das Funktionsprinzip erlegt jedoch keine Größeneinschränkung auf. Die Führungsleisten 8 und die Fördereinrichtung 4 können z.B. an das Gewicht und/oder die Korngröße der Loseteile angepasst werden (vgl. Fig. 6a und 6b). Im dargestellten Ausführungsbeispiel ist der Transportbehälter 5 an seiner Unterseite auf einer Verschiebeplatte 28 befestigt. Die Verschiebeplatte 28 bildet zwei gegenüber liegende Nuten 29, zwischen denen die zugeordnete Führungsleiste 8 aufgenommen ist, sodass die Verschiebeplatte 28 mit dem Transportbehälter 5 auf der Führungsleiste 8 verschieblich gelagert ist. Dabei erstreckt sich der Führungszapfen 16 durch die schlitzförmige Öffnung 23 in der Führungsleiste 8 bis zur Führungsschiene 15 unterhalb der Führungsleiste 8. Die Führungsleiste 8 ist an beiden Enden 30 jeweils mit einem der Zugorgane 7 verbunden oder bildet einen Teil des jeweiligen Zugorgans (z.B. ein Kettenglied).

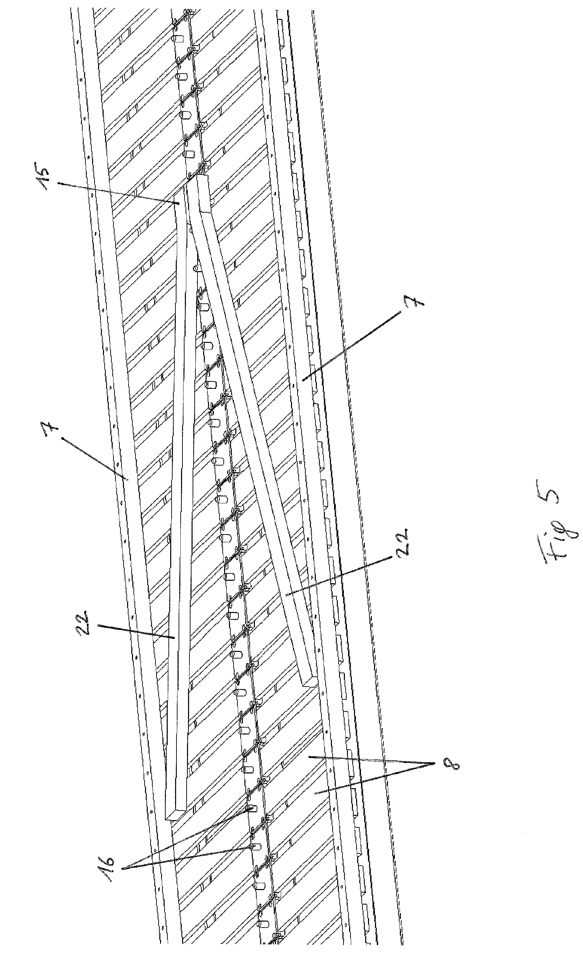

Fig. 5 zeigt eine Draufsicht von unten auf einen unteren Abschnitt des Transportsystems 3. Der gezeigte Abschnitt stellt die Anordnung der Führungselemente 22, welche dem Abwurfbereich 20 nachgeordnet sind, genauer dar. Es sind dabei die Führungszapfen 16 der Transportbehälter 5 ersichtlich. Die Transportbehälter 5 sind hier bereits in einer Reihe angeordnet. Im Allgemeinen können die einzelnen Transportbehälter 5 in unterschiedlichen Querpositionen angeordnet sein. Um alle Transportbehälter 5 unabhängig von ihrer Querposition in eine Reihe zusammen zu führen, sind die V-förmig angeordneten Führungselemente 22 vorgesehen. Die Führungselemente 22 bzw. Führungsschienen sind in einer Ebene parallel zur Fördereinrichtung 4 so angeordnet, dass die Führungszapfen 16 an die Führungselemente 22 anschlagen und durch den schrägen Verlauf der Führungselemente 22 zum Ausweichen nach innen in eine gewünschte mittlere Querposition gezwungen werden. Dort münden die Führungselemente 22 in eine zentrale Führungsschiene 15, in welcher die Führungszapfen 16 weiter in einer Reihe geführt werden können.

Fig. 6a zeigt einen Transportbehälter 5, welcher auf einer alternativen Ausführungsform einer Verschiebeplatte 38 befestigt ist. Die Verschiebeplatte 38 umgibt die Führungsleiste 39 und ist entlang der Führungsleiste 39 verschieblich gelagert. An einer Unterseite 40 der Verschiebeplatte 38, welche Unterseite 40 dem Transportbehälter 5 gegenüber liegt, ist ein Führungszapfen 41 mit der Verschiebeplatte 38 verbunden. Bei dieser Ausführungsform weist die Führungsleiste 39 keinen Schlitz auf.

Eine weitere alternative Ausführungsform ist in Fig. 6b gezeigt. Auch hier ist der Transportbehälter 5 mit einer Verschiebeplatte 42 fest verbunden. An der Unterseite 40 der Verschiebeplatte 42 ist ein Führungszapfen 41 mit der Verschiebeplatte 42 verbunden bzw. daran befestigt. Die Verschiebeplatte 42 weist zwei parallele Kanäle 43 auf, in denen zwei Führungsstangen 44 verschieblich, insbesondere gleitend, gelagert sind. Zur Beförderung des Transportbehälters 4 sind die beiden Führungsstangen 44 mit den Zugorgangen 7 der Fördereinrichtung 4 verbunden. Die Verwendung von Führungsstangen 44 hat bei größeren Abmessungen des Transportbehälters 5 und der Verschiebeplatte 42 den Vorteil, dass gegenüber einer einzelnen, sehr breiten Führungsleiste eine Materialersparnis erzielt werden kann und die gesamte Vorrichtung dadurch leichter wird und dementsprechend auch effizienter anzutreiben und zu befördern ist.

Fig. 7 zeigt den Aufbau einer Weiche 18 gemäß Fig. 1 und 2 mit einem Aktuator 31 zum Schalten der Weiche 18. Die Weiche 18 ist Teil einer Führungsschiene 15, welche als Rillenschiene mit einem Spurkanal 32 zur Aufnahme der Führungszapfen 16 ausgeführt ist. Die Weiche 18 weist einen Einlauf 33 und zwei Ausläufe 34, 35 auf, welche Y-förmig angeordnet sind. Ein durch den Einlauf 33 in die Weiche 18 geführter Führungszapfen kann je nach Stellung der Weichenzunge 19 die Weiche 18 durch den einen oder den anderen der beiden Ausläufe 34, 35 verlassen. Die Weichenzunge 19 versperrt hier den rechten Auslauf 34, sodass ein Führungszapfen zuverlässig vom Einlauf 33 zum linken Auslauf 35 geführt wird. Die Steuerung der Weiche 18 erfolgt somit durch ein Schwenken der Weichenzunge 19 zum Versperren des jeweils nicht zu benutzenden Auslaufs 34, 35. Die Weichenzunge 19 ist verschwenkbar gelagert und über eine Steuerstange 36 mit dem Aktuator 31 verbunden. Der Aktuator 31 wird von einem Steuersystem, z.B. ausgehend vom Prüfsystem 2 zur Einstellung der Weiche 18 angesteuert. Da jeder Transportbehälter 5 nur einen kleinen Teil der Weichen 18 in einer Kaskade durchläuft, müssen nur die jeweils durchlaufenen Weichen angesteuert werden. Dabei muss der Aktuator 31 nur dann tätig werden, wenn die Einstellung der Weiche 18 geändert werden soll. Bei mehreren aufeinander folgenden Transportbehältern, welche zur selben Querposition 24 geführt werden sollen, erfolgt die Steuerung demnach völlig passiv, weil keiner der Aktuatoren 31 aktiviert werden muss.

Beim Transport mit dem vorliegenden Transportsystem 3 werden die Transportbehälter 5 durch die Fördereinrichtung 4 gemeinsam in Förderrichtung 6 bewegt. Zusätzlich zu dieser Bewegung in Förderrichtung 6 können die einzelnen Transportbehälter 5 individuell quer zur Förderrichtung 6 bewegt werden. Dies geschieht insbesondere im Sortierbereich 17 während einer Sortierphase, wobei durch die Ansteuerung der Weichen 18 die einzelnen Transportbehälter 5 in Abhängigkeit von dem jeweils darin enthaltenen Transportgut quer zur Förderrichtung bewegt werden. Die Bewegung quer zur Förderrichtung wird dabei durch die Weichen 18 so gesteuert, dass jeder Transportbehälter 5 vor dem Erreichen des Abwurfbereichs 20 eine jeweils entsprechend dem Transportgut zugeordnete Querposition 24 erreicht. Welche Querposition 24 das jeweils ist, wird in einer der Sortierphase vorangehenden Prüfphase ermittelt. In der Prüfphase durchlaufen die einzelnen Transportbehälter ein Prüfsystem 2. Dabei werden die Transportbehälter 5 in einer einheitlichen, vordefinierten Querposition in Förderrichtung 6 geführt und vorzugsweise quer zur Förderrichtung 6 gehalten und stabilisiert.

## Patentansprüche

1. Transportsystem (3) für Stückgut oder Streugut umfassend eine Fördereinrichtung (4) und mindestens zwei mit der Fördereinrichtung (4) in eine Förderrichtung (6) förderbare Transportbehälter (5) für das Transportgut, wobei die mindestens zwei Transportbehälter (5) individuell quer zur Förderrichtung (6) beweglich gelagert sind.

2. Transportsystem (3) nach Anspruch 1, **dadurch gekennzeichnet, dass** die mindestens zwei Transportbehälter (5) eine sich ausgehend von einer Öffnung (26) verjüngende Aufnahme (27) für das Transportgut aufweisen.

3. Transportsystem (3) nach Anspruch 2, **dadurch gekennzeichnet, dass** die Aufnahme (27) ein im Wesentliches trichterförmiges Aufnahmevolumen definiert.

4. Transportsystem (3) nach einem der Ansprüche 1 bis 3, **dadurch gekennzeichnet, dass** die Fördereinrichtung (4) zumindest ein laufendes Zugorgan (7) aufweist, mit dem die Transportbehälter (5) verbunden sind.

5. Transportsystem (3) nach einem der Ansprüche 1 bis 4, **gekennzeichnet durch** zumindest ein Führungselement (15), insbesondere eine Führungsschiene oder ein Leitblech, zur Steuerung der Bewegung der Transportbehälter (5) quer zur Förderrichtung (6).

6. Transportsystem (3) nach Anspruch 5, **dadurch gekennzeichnet, dass** die Transportbehälter (5) einen Führungszapfen (16) zum Anschlag mit dem Führungselement (15) aufweisen.

7. Transportsystem (3) nach Anspruch 5 oder 6, **dadurch gekennzeichnet, dass** die Führungsschiene (15) zumindest eine Weiche (18) aufweist.

8. Transportsystem (3) nach Anspruch 7, **dadurch gekennzeichnet, dass** die Führungsschiene (15) mindestens drei, in einer Kaskade hintereinander angeordnete Weichen (18) aufweist.

9. Transportsystem (3) nach einem der Ansprüche 1 bis 8, **dadurch gekennzeichnet, dass** die Fördereinrichtung (4) zum Umdrehen der Transportbehälter (5) um eine horizontale Achse (37) eingerichtet ist.

10. Sortiersystem (1) umfassend ein Transportsystem (3) nach einem der Ansprüche 1 bis 9 und ein Prüfsystem (2) zur Klassifizierung eines in den Transportbehältern (5) jeweils aufgenommenen Sortierguts und zur Ansteuerung des Transportsystems (3) in Abhängigkeit von einer durchgeführten Klassifizierung, insbesondere zur Ansteuerung einer oder mehrerer Weichen (18) des Transportsystems (3).

11. Sortiersystem (1) nach Anspruch 10, **dadurch gekennzeichnet, dass** das Prüfsystem (2) ein Spektrometer zur spektroskopischen Untersuchung der Zusammensetzung des Sortierguts umfasst.

12. Verwendung des Sortiersystems (1) nach Anspruch 10 oder 11 zum Sortieren von Metallschrott, Metallfragmenten, Kunststofffragmenten und/oder mineralischen Fragmenten.

13. Verfahren zum Transportieren von Stückgut mit einem Transportsystem (3) nach einem der Ansprüche 1 bis 9 oder einem Sortiersystem (1) nach Anspruch 10 oder 11, **dadurch gekennzeichnet, dass** die Transportbehälter (5) durch die Fördereinrichtung (4) gemeinsam in Förderrichtung (6) bewegt werden, wobei die einzelnen Transportbehälter (5) individuell verschieden quer zur Förderrichtung (6) bewegt werden.

14. Verfahren nach Anspruch 13, **dadurch gekennzeichnet, dass** die einzelnen Transportbehälter (5) während einer Sortierphase in Abhängigkeit von dem jeweils darin enthaltenen Transportgut quer zur Förderrichtung (6) bewegt werden.

15. Verfahren nach Anspruch 14, **dadurch gekennzeichnet, dass** die einzelnen Transportbehälter (6) während einer der Sortierphase vorangehenden Prüfphase ein Prüfsystem (2) durchlaufen, wobei die Transportbehälter (5) in der Prüfphase in einer einheitlichen vordefinierte Querposition geführt werden.
